# EUROPEAN PATENT SPECIFICATION

(11) **EP 1 803 176 B1**
(45) Date of publication and mention of the grant of the patent: **06.10.2010**
(21) Application number: 05809010.1
(22) Date of filing: 14.10.2005
(51) Int. Cl.: H01M 2/10, H01M 2/02

(54) **SECONDARY BATTERY EMPLOYING BATTERY CASE OF HIGH STRENGTH**
SEKUNDÄRBATTERIE MIT HOCHFESTEM BATTERIEGEHÄUSE
ACCUMULATEUR COMPORTANT UN LOGEMENT TRES RESISTANT

(30) Priority: 18.10.2004 KR 20040083075
(43) Date of publication of application: 04.07.2007
(73) Proprietor: LG Chem, Ltd., Youngdungpo-gu, Seoul 150-721 (KR)
(72) Inventor: HWANG, Sung-Min, Mapo-gu,Seoul 121-887 (KR); HONG, Kichul, Seodaemun-gu, Seoul 120-733 (KR); SON, JeongSam, Yuseong-gu, Daejeon 305-340 (KR); AHN, Chang Bum 6-401, LG Chem Sawon Apt, Daejeon 305-340 (KR); LEE, Hyang Mok, Seoul 142-888 (KR); KANG, Kyong Won 103-1006, Kumho Hansarang Apt., Daejeon 301-782 (KR)
(74) Representative: HOFFMANN EITLE
(86) International application number: PCT/KR2005/003436
(87) International publication number: WO 2006/043760

(56) References cited:
- EP-A- 0 975 031
- EP-A- 1 315 219
- WO-A-02/05301
- JP-A- 5 109 395
- JP-A- 62 122 050
- US-B1- 6 242 130
- US-B1- 6 475 668
- US-B1- 6 602 637

## Description

### FIELD OF THE INVENTION

The present invention relates to a secondary battery with a high-strength battery case. More specifically, the present invention relates to a secondary battery utilizing a high-strength battery case capable of significantly reducing the risk of invasion, ignition or explosion as compared to conventional batteries, even when the battery is exposed to external physical impact or is pressed by sharp objects.

### BACKGROUND OF THE INVENTION

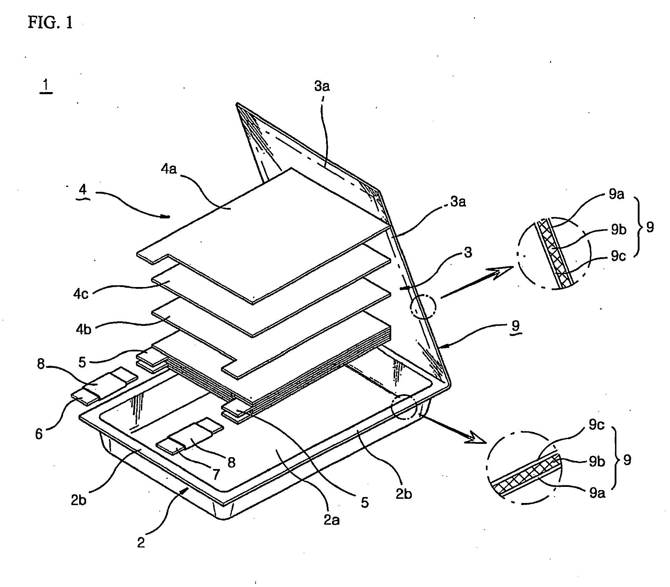

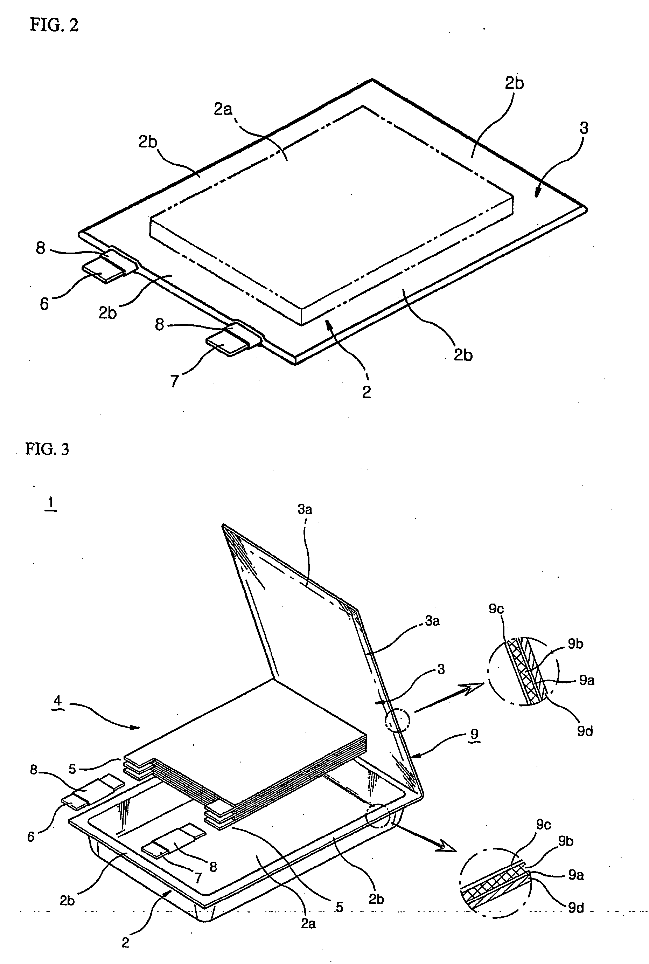

Generally, a lithium ion polymer battery 1, also called "a pouch cell", as shown in FIGS. 1 and 2, is made up of a case body 2 including an internal space 2a having a predetermined size formed therein; a cover 3 rotatably connected to the case body 2; an electrode assembly 4 composed of a cathode plate 4a, an anode plate 4b and a separator sheet 4c and being placed on a receiving part 2a of the case body 2; connection parts 5 extending outward in the length direction from the ends of the cathode plate 4a and anode plate 4b of the electrode assembly 4; and a cathode terminal 6 and an anode terminal 7 connected to the corresponding connection parts 5.

Extension portions 2b having predetermined widths for heat sealing are formed horizontally and outward on the upper edges of the electrode assembly-receiving part 2a of the case body 2. In addition, non-conductive terminal tapes 8 are attached to the central parts of the cathode terminal 6 and anode terminal 7 connected to the corresponding connection parts 5, in order to prevent short-circuiting between a heat sealer (not shown) and the electrode terminals 6 and 7 when the extension portions 2b of the case body 2 and edges 3a of the cover 3 are heat sealed via the heat sealer, and at the same time, in order to increase sealability between respective terminals 6 and 7 and sealing parts 2b and 3a.

Therefore, the battery is prepared by placing an electrode assembly 4 composed of the cathode plate 4a, the anode plate 4b and the separator sheet 4c in the receiving part 2a of the case body 2, injecting a predetermined amount of an electrolyte into the receiving part 2a, and sealing the extension portions 2b of the case body 2 and the edges 3a of the cover 3 using the heat sealer (not shown) such that the electrode is not leaked out, under the condition in which the cover 3 is close to the case body 2.

Herein, the connection parts 5 of the electrode assembly 4 are connected to the corresponding electrode terminals 6 and 7 having terminal tapes 8 attached to the central parts thereof, and some portions of these electrode terminals 6 and 7 and terminal tapes 8 protrude outside of the case body 2 and cover 3.

Meanwhile, the case body 2 and cover 3 are, respectively, made up of an outer coating layer 9a formed of an oriented nylon (ONy) film, a barrier layer 9b formed of aluminum (Al) and an inner sealant layer 9c formed of a cast polypropylene film (CPP), and the edge of the inner sealant layer 9c is coated with a hot melt layer (not shown), thus enabling the extension portions 2b of the case body 2 and the edges 3a of the cover 3 to be closely fixed therebetween, via heat and pressure of the heat sealer.

However, the conventional case body and cover made up of the outer coating layer of ONy, the barrier layer of aluminum (Al) and the inner sealant layer of CPP have suffered from problems such as invasion, ignition or explosion due to susceptibility to damage thereof when the battery made up of such a case body and cover is exposed to physical impact or is pressed by sharp objects.

### SUMMARY OF THE INVENTION

Therefore, the present invention has been made in view of the above problems, and it is an object of the present invention to provide a secondary battery utilizing a high-strength battery case capable of significantly reducing the probability of invasion, ignition or explosion as compared to conventional batteries, even when the battery is exposed to external physical impact or is pressed by sharp objects.

In accordance with an aspect of the present invention, the above and other objects can be accomplished by the provision of a secondary battery having an electrode assembly installed in a battery case made up of a laminated sheet composed of an outer coating layer of a polymer film, a barrier layer of a metal foil and an inner sealant layer of a polyolefin material, wherein the metal foil of the barrier layer is formed of an aluminum alloy, the outer coating layer is formed of polyethylene naphthalate (PEN) and/or the outer surface of the outer coating layer is provided with a polyethylene terephthalate (PET) layer, and wherein the battery case has a nail penetration resistance force of more than 6.5 kgf.

Therefore, the secondary battery in accordance with the present invention is characterized by high strength in a manner that the barrier layer of the metal foil is constructed to improve the strength of the battery case in addition to blocking functions such as the prevention of entrance or leakage of materials exhibited by conventional arts as a main function, and the outer coating layer or the outer surface thereof further includes an additional resin layer.

The nail penetration resistance force means the penetration force measured according to the Puncture Test FTMS 101C Method. In this connection, conventional laminated sheet-type battery cases have nail penetration resistance force of about 5.0 kgf, while the battery case in accordance with the present invention has a nail penetration resistance force of at least 6.5 kgf, preferably 6.5 to 10.0 kgf and more preferably 7.0 to 8.5 kgf. It can be said that a nail penetration resistance force within the above range will ensure battery safety is secured against the probability of damage to the battery by a variety of nail-like members when the battery is used.

The barrier layer contributing to increased strength of the battery case has a thickness of 20 to 150 µm. Where the thickness of the barrier layer is too thin, it is difficult to obtain desired material-blocking and strength-improving effects. In contrast, where the thickness of the barrier layer is too thick, this undesirably leads to lowered processability and an increased thickness of the sheet.

The aluminum alloy constituting the barrier layer exhibits a difference in strength thereof depending upon the species of the alloy ingredients, and includes, but is not limited to, aluminum alloy Nos. 8079, 1N30, 8021, 3003, 3004, 3005, 3104 and 3105, for example. These aluminum alloys may be used alone or any combination thereof. Table 1 below discloses the species of the alloy ingredients and contents thereof. The balance except for "Others" is the content of aluminum.

**<Table 1>**

| Alloy No. | Chemical ingredients | | | | | | | |
|---|---|---|---|---|---|---|---|---|
| | Si | Fe | Cu | Mn | Mg | Zn | Ti | Others |
| 8079 | 0.05-0.3 | 0.7-1.3 | 0-0.05 | - | - | 0-0.1 | - | 0-0.15 |
| 1N30 | 0-0.7 | | 0-0.1 | 0-0.05 | 0-0.05 | 0-0.05 | - | - |
| 8021 | 0-0.15 | 1.2-1.7 | 0-0.05 | - | - | - | - | 0-0.15 |
| 3003 | 0.6 | 0.7 | 0.05-0.2 | 1-1.5 | - | 0.1 | - | - |
| 3004 | 0-0.3 | 0-0.7 | 0-0.25 | 1.0-1.5 | 0.8-1.3 | 0-0.25 | - | 0-0.15 |
| 3005 | 0.6 | 0.7 | 0.3 | 1-1.5 | 0.2-0.6 | 0.25 | 0.1 | - |
| 3104 | 0.6 | 0.8 | 0.05-0.25 | 0.8-1.4 | 0.8-1.3 | 0.25 | 0.1 | - |
| 3105 | 0.6 | 0.7 | 0.3 | 0.3-0.8 | 0.2-0.8 | 0.4 | 0.1 | - |

Among the above-mentioned aluminum alloys, 8079, 1N30, 8021 and 3004 may in particular be preferably employed as the metal foil of the barrier layer.

The polymer film of the outer coating layer preferably has a thickness of 5 to 40 µm. Where the film thickness is too thin, it is difficult to obtain predetermined strength. In contrast, where the film thickness is too thick, this undesirably leads to an increased thickness of the sheet. As described hereinbefore, the polymer film of the outer coating layer in the present invention may be optionally formed of PEN, or otherwise may be preferably formed of an oriented nylon film.

When a PET layer is optionally added to the outer surface of the outer coating layer, the PET layer preferably has a thickness of 5 to 30 µm. Where the film thickness is too thin, it is difficult to achieve strength improving effects via addition of the PET layer. Conversely, where the film thickness is too thick, the thickness of the sheet is undesirably increased.

Even though use of the PEN film as the outer coating layer and addition of the PET layer to the outer surface of the outer coating layer are optional, the above-mentioned desired nail penetration resistance force should be obtained via the application of at least one of these layers. In addition, co-application of the PEN film and PET layer can further improve the strength of the battery case.

The electrode assembly is not particularly limited and thus may also be a jelly-roll type or stacked type. In addition, there is no particular limit to the construction of the electrode assembly so long as it can be installed in the battery case in accordance with the present invention. For example, lithium ion batteries, lithium ion polymer batteries and lithium polymer batteries can be employed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 schematically shows an exploded perspective view and a partially enlarged cross-sectional view of a pouch type of a lithium ion polymer battery in accordance with a conventional art;
FIG. 2 schematically shows a perspective view of a battery of FIG. 1 in an assembled state; and
FIG. 3 schematically shows an exploded perspective view and a partially enlarged cross-sectional view of a pouch type of a lithium ion polymer battery in accordance with one embodiment of the present invention.

### DETAILED DESCRIPTION OF PREFERRED EMBODIMENTS

Hereinafter, the present invention will be described in more detail with reference to the accompanying drawings.

FIG. 3 schematically shows an exploded perspective view of a secondary battery utilizing a battery case made up of a high-strength laminated sheet in accordance with the present invention.

Referring to FIG. 3, a battery 1 in accordance with the present invention, similar to the battery in FIG. 1, takes a structure in which an electrode assembly 4 is installed in a battery case made up of a case body 2 having a receiving part 2a formed therein and a cover 3 rotatably and integrally formed on one end of the case body 2.

The case body 2 and cover 3 form a battery case 9 of a laminated sheet composed of an outer coating layer 9a of a polymer film, a barrier layer 9b of a metal foil and an inner sealant layer 9c of a polyolefin material, wherein the outer surface of the outer coating layer 9a is provided with a PET layer 9d having excellent tensile strength, impact strength and durability.

A polymer film of the outer coating layer 9a is formed of an oriented nylon film Only15 or ONy25. Herein, the number suffixed to the right of ONy represents a thickness. The outer coating layer 9a may be formed of PEN having excellent tensile strength, impact strength and durability.

The metal foil of the barrier layer 9b is formed of an aluminum alloy No. 8079, 1N30, 8021 or 3004.

The inner sealant layer 9c is formed of a cast polypropylene film (CPP) and has a thickness of 30 to 150 µm.

The laminated sheet constituting the battery case in the battery of the present invention can be fabricated in various manners.

For example, the laminated sheet can be prepared by sequentially stacking films and metal foils constituting the respective layers followed by bonding therebetween. Bonding can be carried out via dry lamination or extrusion lamination. Dry lamination is a method involving applying an adhesive between two materials, drying and bonding two materials at a temperature and pressure higher than room temperature and atmospheric pressure using a heating roll. In addition, extrusion lamination is a method involving applying an adhesive between two materials and bonding two materials at room temperature under predetermined pressure using a pressing roll.

### EXAMPLES

Now, the present invention will be described in more detail with reference to the following examples. These examples are provided only for illustrating the present invention and should not be construed as limiting the scope and spirit of the present invention.

### [Examples 1 through 4 and Comparative Example 1]

Laminated sheets were prepared according to composition formula given in Table 2 below. Utilizing the thus-prepared laminated sheets, pouch types of battery cases having a structure as shown in FIG. 3 were prepared via dry lamination.

**<Table 2>**

| | Structure of laminated sheets | | | | | | |
|---|---|---|---|---|---|---|---|
| Comp. Ex. 1 | ONy25 | | | B | A140(8079) | C | CPP45 |
| Ex. 1 | PET15 | A | ONy25 | B | A180(1N30) | C | CPP60 |
| Ex. 2 | PET15 | A | ONy25 | B | A180(8021) | C | CPP50 |
| Ex. 3 | PEN12 | | | B | A1100(3004) | C | CPP30 |
| Ex. 4 | PEN12 | | | B | A1100(8021) | C | CPP50 |

| | | | | | | | |
|---|---|---|---|---|---|---|---|
| Note: The number suffixed to the right of PET, ONy, PEN, Al and CPP represents a thickness. | | | | | | | |

A stacked type of an electrode assembly, as shown in FIG. 3, was mounted on the respective battery cases, and the resulting structures were impregnated with an electrolyte. Then, a case body and a cover were heat sealed therebetween, thereby preparing pouch types of battery cells.

Nail penetration resistance forces of the thus-prepared battery cells were measured using a battery penetration experimental apparatus (UTM tester) under FTMS 101C conditions. The results thus obtained are given in Table 3 below. Nail penetration resistance force on the above apparatus was expressed as force measured when a nail-like member has penetrated through the battery case by pushing the member on the upper surface of the battery cell.

**<Table 3>**

| | Penetration force (kgf) |
|---|---|
| Comp. Ex. 1 | 5.0 |
| Ex. 1 | 8.3 |
| Ex. 2 | 8.5 |
| Ex. 3 | 6.8 |
| Ex. 4 | 7.0 |

As can be seen from Table 3, it was confirmed that a conventional battery (Comparative Example 1) is penetrated by the nail-like member at force of 5.0 kgf, while all batteries of the present invention (Examples 1 through 4) exhibit a penetration force of more than 6.5 kgf. Therefore, it can be seen that batteries of the present invention are not easily penetrated by impact of various nail-like members that can be considered during the use of batteries and thus are capable of securing battery safety. Further, it was confirmed that batteries of Examples 1 and 2, in which a PET layer was added to the outer surface of the outer coating layer, particularly exhibit excellent mechanical strength.

### INDUSTRIAL APPLICABILITY

As apparent from the above description, a battery in accordance with the present invention achieves high mechanical strength via provision of a barrier layer of an aluminum (Al) alloy and a PEN outer coating layer and/or an additional PET layer. Therefore, it is possible to prepare a battery having further improved safety due to the ability to significantly reduce the probability of invasion, ignition or explosion as compared to conventional batteries, even when the battery is exposed to external physical impact or is pressed by sharp objects.

Although the preferred embodiments of the present invention have been discloses for illustrative purposes, those skilled in the art will appreciate that various modifications, additions and substitutions are possible, without departing from the scope and spirit of the invention as disclosed in the accompanying claims.

## Claims

1. A secondary battery having an electrode assembly installed in a battery case made up of a laminated sheet composed of an outer coating layer of a polymer film, a barrier layer of a metal foil and an inner sealant layer of a polyolefin material, wherein the metal foil of the barrier layer is formed of an aluminum alloy, the outer coating layer is formed of polyethylene naphthalate (PEN) and/or the outer surface of the outer coating layer is provided with a polyethylene terephthalate (PET) layer, and wherein the battery has a nail penetration resistance force of more than 6.5 kgf.

2. The battery according to claim 1, wherein the nail penetration resistance force is in the range of 6.5 to 10.0 kgf.

3. The battery according to claim 1, wherein the barrier layer has a thickness of 20 to 150 µm.

4. The battery according to claim 1, wherein the aluminum alloy is selected from the group consisting of aluminum alloy Nos. 8079, 1N30, 8021, 3003, 3004, 3005, 3104, 3105 and any combination thereof.

5. The battery according to claim 4, wherein the aluminum alloy is selected from the group consisting of aluminum alloy Nos. 8079, 1N30, 8021, 3004 and any combination thereof.

6. The battery according to claim 1, wherein the outer coating layer has a thickness of 5 to 40 µm.

7. The battery according to claim 1, wherein the polymer film of the outer coating layer is formed of an oriented nylon film provided with the outer surface of the outer coating layer in the form of a polyethylene terephthalate (PET) layer.

8. The battery according to claim 1, wherein the PET layer has a thickness of 5 to 30 µm when the PET layer is optionally added to the outer surface of the outer coating layer.

## Patentansprüche

1. Akkumulator mit einer Elektrodenanordnung, die in einem Batteriegehäuse installiert ist, das aus einer laminierten Platte hergestellt ist, die aus einer äußeren Beschichtungsschicht aus einem Polymerfilm, einer Barriereschicht aus einer Metallfolie und einer inneren Abdichtschicht aus einem Polyolefinmaterial zusammengestellt ist, wobei die Metallfolie der Barriereschicht aus einer Aluminiumlegierung gebildet ist, die äußere Beschichtungsschicht aus Polyethylennaphthalat (PEN) gebildet ist und/oder die äußere Oberfläche der äußeren Beschichtungsschicht mit einer Polyethylenterephthalat (PET)-Schicht versehen ist, und wobei der Akkumulator eine Nageldurchstoßwiderstandskraft von mehr als 6,5 kgf aufweist.

2. Akkumulator nach Anspruch 1, wobei die Nageldurchstoßwiderstandskraft im Bereich von 6,5 bis 10,0 kgf liegt.

3. Akkumulator nach Anspruch 1, wobei die Barriereschicht eine Dicke von 20 bis 150µm aufweist.

4. Akkumulator nach Anspruch 1, wobei die Aluminiumlegierung aus der Gruppe ausgewählt ist, die aus Aluminiumlegierungen Nrn. 8079, 1N30, 8021, 3003, 3004, 3005, 3104, 3105 und einer beliebigen Kombination daraus besteht.

5. Akkumulator nach Anspruch 4, wobei die Aluminiumlegierung aus der Gruppe ausgewählt ist, die aus Aluminiumlegierungen Nrn. 8079, 1N30, 8021, 3004 und einer beliebigen Kombination daraus besteht.

6. Akkumulator nach Anspruch 1, wobei die äußere Beschichtungsschicht eine Dicke von 5 bis 40 µm aufweist.

7. Akkumulator nach Anspruch 1, wobei der Polymerfilm der äußeren Beschichtungsschicht aus einem ausgerichteten Nylonfilm ausgebildet ist, der mit der äußeren Oberfläche der äußeren Beschichtungsschicht in der Form einer Polyethylenterephthalat (PET)-Schicht versehen ist.

8. Akkumulator nach Anspruch 1, wobei die PET-Schicht eine Dicke von 5 bis 30 µm aufweist, wenn die PET-Schicht optional zu der äußeren Oberfläche der äußeren Beschichtungsschicht hinzugefügt wird.

## Revendications

1. Batterie rechargeable ayant un ensemble d'électrodes installé dans un boîtier de batterie composé d'une feuille stratifiée composée d'une couche de revêtement externe en film polymère, d'une couche barrière en plaque métallique et d'une couche étanche interne en matériau de polyoléfine, où la plaque métallique de la couche barrière est formée en alliage d'aluminium, la couche de revêtement externe est formée de polynaphthalate d'éthylène (PEN) et/ou la surface externe de la couche de revêtement externe est dotée d'une couche de polyéthylène téréphtalate (PET), et où la batterie a une force de résistance à la pénétration d'un clou dépassant 6,5 kgf.

2. Batterie selon la revendication 1, dans laquelle la force de résistance à la pénétration d'un clou se trouve dans la gamme de 6,5 à 10,0 kgf.

3. Batterie selon la revendication 1, dans laquelle la couche barrière a une épaisseur de 20 à 150 µm.

4. Batterie selon la revendication 1, dans laquelle l'alliage d'aluminium est sélectionné du groupe constitué d'un alliage d'aluminium des Num. 8079, 1N30, 8021, 3003, 3004, 3005, 3104, 3105, et de l'une de leurs combinaisons.

5. Batterie selon la revendication 4, dans laquelle l'alliage d'aluminium est sélectionné du groupe constitué d'un alliage d'aluminium Num. 8079, 1N30, 8021, 3004 et de l'une de leurs combinaisons.

6. Batterie selon la revendication 1, dans laquelle la couche de revêtement externe a une épaisseur de 5 à 40 µm.

7. Batterie selon la revendication 1, dans laquelle le film polymère de la couche de revêtement externe est formé d'un film de nylon orienté doté de la surface externe de la couche de revêtement externe en forme de couche de polyéthylène téréphtalate (PET).

8. Batterie selon la revendication 1, dans laquelle la couche de PET a une épaisseur de 5 à 30 µm lorsque la couche de PET est facultativement ajoutée à la surface externe de la couche de revêtement externe.
